# EUROPÄISCHE PATENTSCHRIFT

(11) **EP 1 530 110 B1**
(45) Veröffentlichungstag und Bekanntmachung des Hinweises auf die Patenterteilung: **22.04.2009**
(21) Anmeldenummer: 04020001.6
(22) Anmeldetag: 24.08.2004
(51) Int. Cl.: G05D 16/06, F16K 7/12

(54) **Gasdruckregler**
Gas pressure regulator
Régulateur de pression de gaz

(30) Priorität: 08.11.2003 DE 20317221 U
(43) Veröffentlichungstag der Anmeldung: 11.05.2005
(73) Patentinhaber: GOK Regler- und Armaturen-Gesellschaft mbH & Co.KG, 97252 Frickenhausen (DE)
(72) Erfinder: Wanner, Ernst, 97252 Frickenhausen (DE)
(74) Vertreter: Gassner, Wolfgang

(56) Entgegenhaltungen:
- DE-A1- 3 207 224
- DE-A1- 19 854 301
- FR-A- 1 588 004
- FR-A- 2 495 731
- FR-A- 2 755 208
- FR-E- 91 068
- US-A- 5 203 371

## Beschreibung

Die Erfindung betrifft einen Gasdruckregler nach dem Oberbegriff des Anspruchs 1.

Ein solcher Gasdruckregler ist aus der DE 198 54 301 C2 bekannt. Dabei sind in einem einzigen Gehäuse zwei Regelstufen aufgenommen. Wenn in einem dem Gasdruckregler nachgeordneten Gasgerät oder in einer Versorgungsleitung zu dem Gasgerät ein Leck auftritt, wird vom Gasdruckregler weiterhin Gas geliefert, welches durch das Leck austritt. Ein solcher Gasaustritt ist aus Sicherheitsgründen zu vermeiden. Ein weiterer zweistufiger Gasdruckregler ist aus der US 5,203,371 bekannt.

Nach dem Stand der Technik sind weiteren Gasmangelsicherungseinrichtungen bekannt. Es handelt sich dabei um einen besonderen einstufigen Gasdruckregler der bei einem erheblichen Abfall des am Ausgang wirkenden Gasdrucks automatisch sperrt, so dass am Ausgang kein weiteres Gas mehr austreten kann. Die Gasmangelsicherungseinrichtung kann durch manuelles Betätigen eines daran vorgesehenen Stellmittels wieder geöffnet werden. Sie ist üblicherweise stromabwärts in einiger Entfernung von einem an einer Flüssiggasflasche angebrachten Gasdruckregler in die Versorgungsleitung eingeschaltet. Infolge dessen kann es unerwünschterweise dazu kommen, dass durch ein Leck in dem den Gasdruckregler mit der Gasmangelsicherungseinrichtung verbindenden Abschnitt der Versorgungsleitung Gas austritt. Abgesehen davon sind die Herstellung und die Montage eines Gasdruckreglers und einer separaten Gasmangelsicherungseinrichtung aufwändig.

Einstufige Gasdruckregler mit integrierter Gasmangelsicherungseinrichtung sind aus den DE 32077224 A1, FR 91068E, FR 1588004 und FR 2 755 208 bekannt.

Aufgabe der Erfindung ist es, die Nachteile nach dem Stand der Technik zu beseitigen. Es soll insbesondere ein sicherheitstechnisch verbesserter Gasdruckregler angegeben werden, der möglichst einfach herstell- und montierbar ist.

Diese Aufgabe wird durch die Merkmale des Anspruchs 1 gelöst. Zweckmäßige Ausgestaltungen ergeben sich aus den Merkmalen der Ansprüche 2 bis 9.

Nach Maßgabe der Erfindung ist vorgesehen, dass die zweite Regelstufe eine Gasmangelsicherungseinrichtung mit einem manuell betätigbaren Stellmittel aufweist, mittels derer bei einem Druckabfall in der zweiten Regelstufe unter einen vorgegebenen Mindestwert der Durchbruch automatisch derart verschließbar ist, dass ein Regelbetrieb erst nach manueller Betätigung des Stellmittels wieder möglich ist. - Indem die zweite Regelstufe eine Gasmangelsicherungseinrichtung aufweist, entfällt die Notwendigkeit, eine separate Gasmangelsicherungseinrichtung mit einem Gasdruckregler mittels einer Leitung zu verbinden. Es kann nicht mehr zu einem unerwünschten Gasaustritt zwischen der Gasmangelsicherungseinrichtung und dem Gasdruckregler kommen. Der vorgeschlagene Gasdruckregler ist einfach herstell- und montierbar.

Nach einer vorteilhaften Ausgestaltung weist die zweite Regelstufe einen an seinem ersten Ende bewegbar mit einer Stellmembran angebrachten Ventilhebel zur Betätigung eines Verschlusselements zum Verschließen des Durchbruchs auf. Das Verschlusselement ist vorteilhafterweise schwenkbar um eine erste Schwenkachse am zweiten Ende des Ventilhebels angebracht. Ferner kann das Verschlusselement in einem am Gehäuse angebrachten Festlager schwenkbar um eine zweite Schwenkachse gehalten sein. Nach einem weiteren Ausgestaltungsmerkmal ist ein vom Gehäuse sich erstreckendes Auflager im Bewegungsweg des Ventilhebels zwischen dem ersten Ende und dem ersten Schwenklager angebracht. Ein Gasdruckregler mit den vorgenannten Merkmalen lässt sich relativ einfach und kostengünstig herstellen. Bei einem unerwünschten Druckabfall in der zweiten Regelstufe wird diese mittels der Gasmangelsicherungseinrichtung sicher und zuverlässig verschlossen.

Nach einem weiteren Ausgestaltungsmerkmal ist der Durchbruch in einem die erste von der zweiten Regelstufe trennenden Gehäuseboden vorgesehen und das Auflager erstreckt sich vom Gehäuseboden in die zweite Regelstufe. Die vorgeschlagene Ausführung ermöglicht einen kompakten Aufbau des Gasdruckreglers.

Vorteilhafterweise ist das Verschlusselement entgegen der Spannung einer Feder zum Verschließen des Durchbruchs verschwenkbar. Das ermöglicht einen komplikationslosen Regelbetrieb.

Das Stellmittel kann einen von der Außenseite des Gehäuses her bedienbaren Stift aufweisen, welcher an einer dem gasführenden Druckregelraum abgewandten Seite der Stellmembran angebracht ist. Ferner kann eine Arretiereinrichtung vorgesehen sein, mit der bei einem Abschalten infolge eines Gasmangels der Ventilhebel in einer Position arretierbar ist, in welcher der Durchbruch verschlossen ist, und wobei die Arretierung durch Betätigung des Stifts lösbar ist. Bei der Arretiereinrichtung kann es sich um eine herkömmliche Arretiereinrichtung handeln, mit welcher beispielsweise der Stift in einer bestimmten Position gehalten wird, sobald er diese erreicht. In dieser Position kann der Stift beispielsweise klemmend oder verrastet gehalten werden.

Nachfolgend wird ein Ausführungsbeispiel der Erfindung anhand der Zeichnung näher erläutert. Es zeigen:
- Fig. 1: eine schematische Schnittansicht eines Gasdruckreglers in einem ersten Funktionszustand,
- Fig. 2: eine schematische Schnittansicht des Gasdruckreglers gemäß Fig. 1 in einem zweiten Funktionszustand und
- Fig. 3: eine schematische Schnittansicht des Gasdruckreglers gemäß Fig. 1 in einem dritten Funktionszustand.

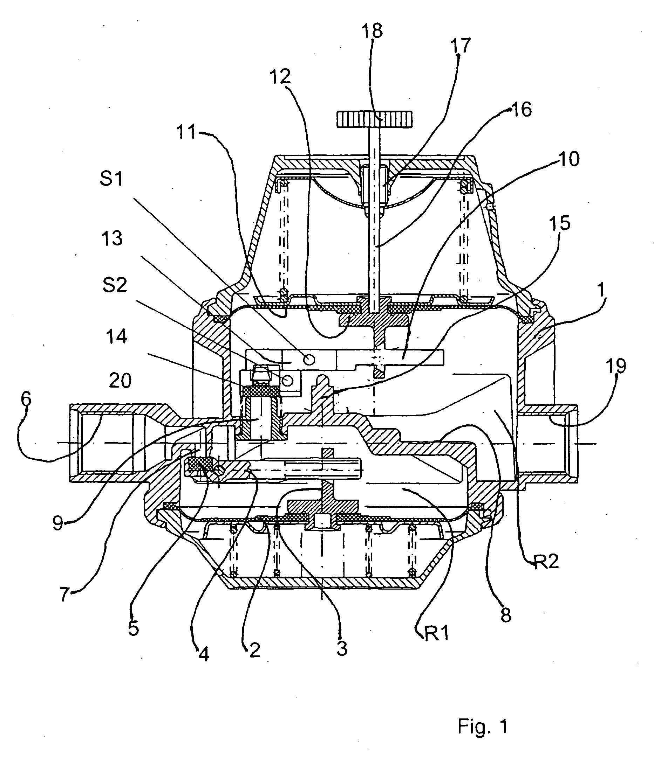

Bei dem in den Fig. 1 bis 3 gezeigten Gasdruckregler sind in einem Gehäuse 1 eine erste R1 und eine stromabwärts davon angeordnete zweite Regelstufe R2 aufgenommen. Die erste Regelstufe R1 umfasst eine erste Stellmembran 2 mit einer ersten Stellöse 3, in die ein schwenkbar gelagerter erste Ventilhebel 4 mit seinem einen Ende eingreift. An einem anderen Ende des ersten Ventilhebels 4 ist ein erstes Verschlusselement 5 vorgesehen, das z. B. als Dichtung eine erste Gummischeibe umfassen kann. Das erste Verschlusselement 5 verschließt im hier gezeigten Verschlusszustand einen einem Eingangsstutzen 6 nachgeordneten ersten Durchbruch 7.

Eine zweite Regelstufe R2 ist durch einen Gehäuseboden 8 von der ersten Regelstufe R1 getrennt. Ein im Gehäuseboden 8 vorgesehener zweiter Durchbruch 9 kann - wie hier gezeigt - durch eine Düse gebildet sein. Ein zweiter Ventilhebel 10 ist mit seinem ersten Ende bewegbar in einer an einer zweiten Stellmembran 11 angebrachten zweiten Stellöse 12 aufgenommen. Ein zweites Verschlusselement 13 ist im Bereich eines zweiten Endes des zweiten Ventilhebels 10 angebracht. Das zweite Verschlusselement 13 ist schwenkbar um eine erste Schwenkachse S1 am zweiten Ventilhebel 13 angebracht. Ferner ist das zweite Verschlusselement 13 schwenkbar an einer zweiten Schwenkachse S2 gehalten, welche am Gehäuse 1, vorzugsweise am Gehäuseboden 8, angebracht ist. Das zweite Verschlusselement 13 weist einen Hebel auf, an dem die beiden Schwenkachsen S1, S2 angebracht sind. Der Hebel verbindet einen Verschlusskörper schwenkbar mit dem Ventilhebel 10. Die erste Schwenkachse S1 ist relativ zum Gehäuse 1 bewegbar, nämlich schwenkbar um die zweite Schwenkachse S2, wohingegen die zweite Schwenkachse S2 relativ zum Gehäuse 1 feststehend ist. Zum dichten Verschließen des zweiten Durchbruchs 9 kann das zweite Verschlusselement 13, insbesondere der Verschlusskörper, eine Dichtung, z. B. eine zweite Gummischeibe 14, aufweisen. Vom Gehäuseboden 8 erstreckt sich ein Auflager 15 in den Bewegungsweg des zweiten Ventilhebels 10. Das Auflager 15 ist zwischen der ersten Schwenkachse S1 und dem ersten Ende des zweiten Ventilhebels 10 angeordnet.

An einer dem gasbeaufschlagten Raum abgewandten Seite der zweiten Stellmembran 11 ist ein Stift 16 an einer Rückseite der zweiten Stellöse 12 fest angebracht. Der Stift 16 ist in einer herkömmlichen Arretiereinrichtung 17 geführt und weist an seinem außerhalb des Gehäuses 1 befindlichen Ende ein Greifstück 18 auf. Ein von der zweiten Regelstufe R2 wegführender Ausgangsstutzen ist mit dem Bezugszeichen 19 bezeichnet. Mit dem Bezugszeichen 20 ist eine Feder bezeichnet, welche auf dem Gehäuseboden 8 abgestützt ist und das zweite Verschlusselement 13 in eine geöffnete Stellung zwingt.

Fig. 1 zeigt einen ersten Funktionszustand des Gasdruckreglers. Dabei herrschen in der ersten R1 und in der zweiten Regelstufe R2 jeweils ein Überdruck. Das erste Verschlusselement 5 verschließt den ersten Durchbruch 7. Das zweite Verschlusselement 13 verschließt den zweiten Durchbruch 9.

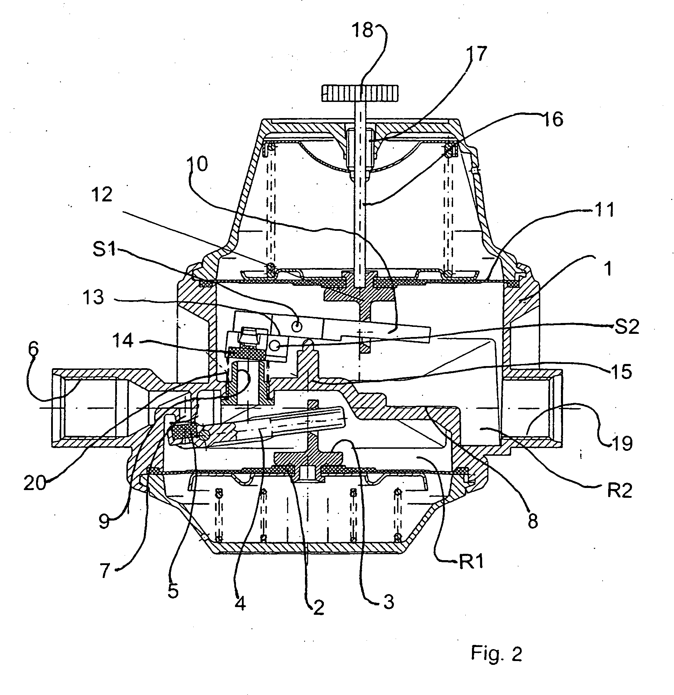

Fig. 2 zeigt den Funktionszustand bei einem Abfallen des Drucks in der zweiten Regelstufe R2. Es kommt dadurch bedingt zu einer Bewegung der zweiten Stellmembran 11 in Richtung des Gehäusebodens 8. Der zweite Ventilhebel 10 wird um die zweite Schwenkachse S2 verschwenkt. Die Feder 20 drückt das zweite Verschlusselement 13 in eine den zweiten Durchbruch 9 freigebende Position. Infolgedessen fällt der Druck in der ersten Regelstufe R1 ab. Die erste Stellmembran 2 bewegt sich in Richtung des Gehäusebodens 8 und der erste Ventilhebel 4 wird so verschwenkt, dass das erste Verschlusselement 5 den ersten Durchbruch 7 freigibt.

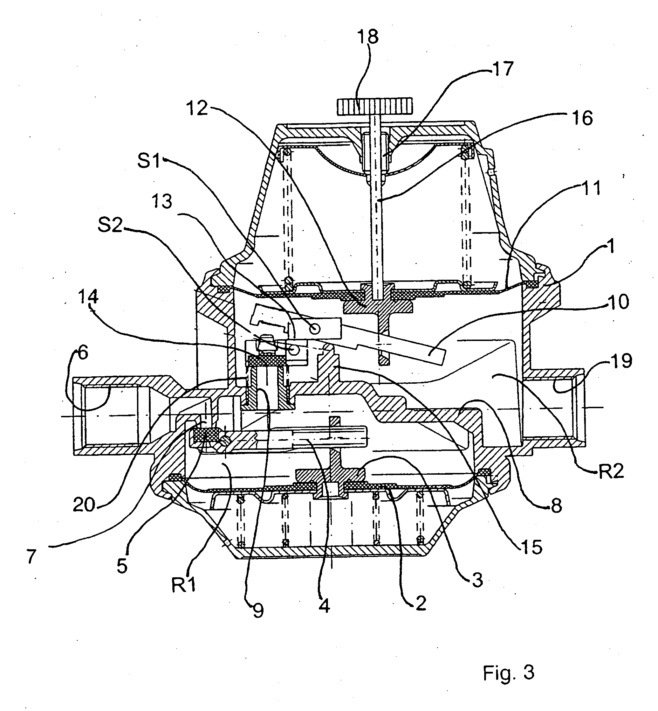

Fig. 3 zeigt den Funktionszustand bei einem Druckabfall in der zweiten Regelstufe R2 unterhalb eines vorgegebenen Mindestwerts. In diesem Fall bewegt sich die zweite Stellmembran 11 weiter in Richtung des Gehäusebodens 8. Der zweite Ventilhebel 10 liegt gegen das Auflager 15 auf und wird darum verschwenkt. Infolgedessen kehrt sich die Schwenkbewegung des zweiten Verschlusselements 13 um die zweite Schwenkachse S2 um. Das zweite Verschlusselement 13 wird entgegen der Kraft der Feder 20 um die Schwenkachsen S1 und S2 in eine den Durchbruch 9 verschließende Stellung gezwungen. Dabei gelangt der Stift 16 innerhalb der Arretiereinrichtung 17 in eine Position, in welcher dieser arretiert ist. Bei dem in Fig. 3 gezeigten Funktionszustand ist der zweite Durchbruch 9 verschlossen. Eine Regelung mittels der ersten R1 und der zweiten Regelstufe R2 ist in diesem Zustand nicht mehr möglich. Erst durch eine manuelle Betätigung, nämlich ein Anheben, des Greifstücks 18 kann die Arretierung des Stifts 16 wieder aufgehoben und die zweite Stellmembran 11 in eine Position bewegt werden, welche erneut eine Regelung mittels der zweiten Regelstufe R2 ermöglicht.

Mit dem vorgeschlagenen Gasdruckregler wird ein hohes Maß an Sicherheit erreicht.

### Bezugszeichenliste

- 1: Gehäuse
- 2: erste Stellmembran
- 3: erste Stellöse
- 4: erster Ventilhebel
- 5: erstes Verschlusselement
- 6: Eingangsstutzen
- 7: erster Durchbruch
- 8: Gehäuseboden
- 9: zweiter Durchbruch
- 10: zweiter Ventilhebel
- 11: zweite Stellmembran
- 12: zweite Stellöse
- 13: zweites Verschlusselement
- 14: Gummischeibe
- 15: Auflager
- 16: Stift
- 17: Arretiereinrichtung
- 18: Greifstück
- 19: Ausgangsstutzen
- 20: Feder

- R1: erste Regelstufe
- R2: zweite Regelstufe
- S1: erste Schwenkachse
- S2: zweite Schwenkachse

## Patentansprüche

1. Gasdruckregler, bei dem in einem Gehäuse (1) eine erste Regelstute (R1) und eine der ersten Regelstufe (R1) stromabwärts nachgeschaltete zweite Regelstufe (R2) aufgenommen sind, wobei die erste (R1) und die zweite Regelstufe (R2) über einen verschließbaren Durchbruch (9) miteinander verbunden sind,
**dadurch gekennzeichnet, dass**
die zweite Regelstufe (R2) eine Gasmangelsicherungseinrichtung (13, 14, 15, 16, 17, 18) mit einem manuell betätigbaren Stellmittel (16, 18) und einer Arretiereinrichtung (17) aufweist, mittels derer bei einem Druckabfall in der zweiten Regelstufe (R2) unter einen vorgegebenen Mindestwert der Durchbruch (9) automatisch verschlossen und arretiert wird, so dass ein Regelbetrieb erst nach manueller Betätigung des Stellmittels (16, 18) und **dadurch** bedingter Aufhebung der Arretierung wieder möglich ist.

2. Gasdruckregler nach Anspruch 1, wobei die zweite Regelstufe (R2) einen an seinem ersten Ende bewegbar mit einer Stellmembran (11) angebrachten Ventilhebel (10) zur Betätigung eines Verschlusselements (13) zum Verschließen des Durchbruchs (9) aufweist.

3. Gasdruckregler nach Anspruch 2, wobei das Verschlusselement (13) schwenkbar um eine erste Schwenkachse (S1) am zweiten Ende des Ventilhebel (10) angebracht ist.

4. Gasdruckregler nach einem der Ansprüche 2 oder 3, wobei das Verschlusselement (13) in einem am Gehäuse (1) angebrachten Festlager Schwenkbar um eine zweite Schwenkachse (S2) gehalten ist.

5. Gasdruckregler nach einem der vorergehenden Ansprüche, wobei ein vom Gehäuse (1) sich erstreckende Auflager (15) im Bewegungsweg des Ventilhebels (10) zwischen dem ersten Ende und der ersten Schwenkachse (S1) angebracht ist.

6. Gasdruckregler nach einem der vorhergehenden Ansprüche, wobei der Durchbruch (9) in einem die erste (R1) von der zweiten Regelstufe (R2) trennenden Gehäuseboden (8) vorgesehen ist und das Auflager (15) sich vom Gehäuseboden (8) in die zweite Regelstufe (R2) erstreckt.,

7. Gasdruckregler nach einem der Ansprüche 2 bis 4, wobei das verschlusselement (13) entgegen der Spannung einer Feder (20) zum Verschließen des Durchbruchs (9) verschwenkbar ist.

8. Gasdruckregler nach einem der Ansprüche 2 bis 7, wobei das Stellmittel (16, 18) einen von der Außenseite der Gehäuses (1) her bedienbaren Stift (16) aufweist, welcher an einer dem gasführenden Druckregelraum abgewandten Seite der Stellmembran (11) angebracht ist.

9. Gasdruckregler nach einem der vorhergehenden Ansprüche, wobei eine Arretiereinrichtung (17) vorgesehen ist, mit der bei einem Abschalten infolge eines Gasmangels der Ventilhebel (10) in einer Position arretierbar ist, in welcher der Durchbruch (9) verschlossen ist, und dass die Arretierung durch Betätigung des Stifts (16) lösbar ist.

## Claims

1. Gas pressure controller having a housing (1) which contains a first regulating stage (R1) and a second regulating stage (R2) installed downstream from the first regulating stage (R1), wherein the first (R1) and the second regulating stage (R2) are connected to each other via a closable breakthrough (9),
**characterised in that**
the second regulating stage (R2) has a gas defect safety unit (13, 14, 15, 16, 17, 18) with a manually operable control means (16, 18) and with an arresting unit, by which, when pressure drops in the second regulating stage (R2) below a specified minimum value, the breakthrough (9) is automatically closed and arrested in such a way that a regulating operation is not possible again until after manual operation of the control means (16, 18) causing release of the arrest.

2. Gas pressure controller as defined in claim 1, wherein the second regulating stage (R2) is equipped with a valve arm (10) installed on its first end movably with a control membrane (11) for the operation of a closing element (13) for closing the breakthrough (9).

3. Gas pressure controller as defined in claim 2, wherein the closing element (13) is installed swivelably around a first swivel axis (S1) on the second end of the valve arm (10).

4. Gas pressure controller as defined in claim 2 or 3, wherein the closing element (13) is held in a fixed bearing installed on the housing (1) and can be swivelled around a second swivel axis (S2).

5. Gas pressure controller as defined in one of the preceding claims, wherein a support (15) extending from the housing (1) in the direction of movement of the valve arm (10) is installed between the first end and the first swivel axis (S1).

6. Gas pressure controller as defined in one of the preceding claims, wherein the breakthrough (9) is provided in a housing floor (8) separating the first (R1) from the second regulating stage (R2) and the support (15) extends from the housing floor (8) into the second regulating stage (R2).

7. Gas pressure controller as defined in one of the claims 2 to 4, wherein the closing element (13) can be swiveled against the tension of a spring (20) to close the breakthrough (9).

8. Gas pressure controller as defined in one of the claims 2 to 7, wherein the control means (16, 18) has a pin (16) which can be operated from the outside of the housing (1) and which is installed on a side of the control membrane (11) which is turned away from the gas-carrying pressure control space.

9. Gas pressure controller as defined in one of the preceding claims, wherein an arresting unit (17) is provided with which, when a switchoff occurs due to a gas defect, the valve arm (10) can be arrested in a position in which the breakthrough (9) is closed and that the arrest can be released by operating the pin (16).

## Revendications

1. Régulateur de pression de gaz, dans lequel un premier étage de régulation (R1) et un deuxième étage de régulation (R2) monté en aval du premier étage de régulation (R1) sont reçus dans un boîtier (1), le premier (R1) et le deuxième (R2) étages de régulation communiquant entre eux par l'intermédiaire d'un percement (9) pouvant être fermé,
**caractérisé en ce que** le deuxième étage de régulation (R2) présente un dispositif (13, 14, 15, 16, 17, 18) formant robinet de sécurité à pression de consigne minimale, doté d'un moyen de commande (16, 18) à actionnement manuel et d'un dispositif d'arrêt ou de blocage (17) à l'aide duquel, en cas de baisse de pression en dessous d'une valeur minimale prédéfinie dans le deuxième étage de régulation (R2), le percement (9) peut être automatiquement fermé et arrêté de telle sorte qu'un service de régulation n'est à nouveau possible qu'après actionnement manuel du moyen de commande (16, 18) et la levée de l'arrêt ou du blocage ainsi conditionné.

2. Régulateur de pression de gaz selon la revendication 1, le deuxième étage de régulation (R2) présentant un levier de soupape (10), qui est monté de façon mobile à sa première extrémité à déplacement avec une membrane de commande (11) et qui est destiné à actionner un obturateur (13) pour fermer le percement (9).

3. Régulateur de pression de gaz selon la revendication 2, l'obturateur (13) étant monté à la deuxième extrémité du levier de soupape (10) à pivotement autour d'un premier axe de pivotement (S1).

4. Régulateur de pression de gaz selon la revendication 2 ou 3, l'obturateur (13) étant maintenu à pivotement autour d'un deuxième axe de pivotement (S2) dans un palier fixe monté sur le boîtier (1).

5. Régulateur de pression de gaz selon l'une des revendications précédentes, un palier d'appui (15) s'étendant à partir du boîtier (1) dans la voie de déplacement du levier de soupape (10) est monté entre la première extrémité et le premier axe de pivotement (S1).

6. Régulateur de pression de gaz selon l'une des revendications précédentes, le percement (9) étant prévu dans un fond de boîtier (8) séparant le premier (R1) du deuxième (R2) étage de régulation, et le palier d'appui (15) s'étend à partir du fond de boîtier (8) dans le deuxième étage de régulation (R2).

7. Régulateur de pression de gaz selon l'une des revendications 2 à 4, l'obturateur (13) pouvant être pivoté pour fermer le percement (9) à l'encontre de la tension d'un ressort (20).

8. Régulateur de pression de gaz selon l'une des revendications 2 à 7, le moyen de commande (16, 18) présentant une tige (16) qui peut être manoeuvrée depuis l'extérieur du boîtier (1) et qui est montée sur un côté de la membrane de commande (11) qui est opposée à la chambre de régulation de pression pourvue de gaz.

9. Régulateur de pression de gaz selon l'une des revendications précédentes, dans lequel il est prévu un dispositif de blocage ou d'arrêt (17) par lequel, lors d'une désactivation consécutive à une carence de gaz, le levier de soupape (10) peut être bloqué ou arrêté dans une position dans laquelle le percement (9) est fermé, et dans lequel le blocage ou l'arrêt peut être supprimé ou levé par l'actionnement de la tige (16).
